# EUROPEAN PATENT APPLICATION

(11) **EP 2 827 550 A1**
(43) Date of publication of application: **21.01.2015**
(21) Application number: 14158221.3
(22) Date of filing: 06.03.2014
(51) Int. Cl.: H04L 29/06

(54) **Loadable flexible protocol profiles**

(30) Priority: 14.05.2013 US 201313893629
(71) Applicant: Honeywell International Inc., Morristown, NJ 07962-2245 (US)
(72) Inventor: Eckert, Richard J., Morristown, NJ 07962-2245 (US)
(74) Representative: Houghton, Mark Phillip

(57) **Abstract**

A flexible protocol suite is provided. The flexible protocol suite includes at least one flexible protocol layer including at least one profile loaded from an external device, wherein the loaded at least one profile, when selected for operation as a selected profile, dictates the behavior of the protocol during an exchange of messages.

## Description

### GOVERNMENT LICENSE RIGHTS

The U.S. Government may have rights in the invention under Government Contract Number DTFAWA-10-A-80003 awarded by the Federal Aviation Administration (FAA).

### BACKGROUND

New protocols are being defined and are planned for use in various computing and/or networking systems. In fact, the number of newer versions of existing protocols for use in various computing and/or networking systems is increasing rapidly for various applications. For example, a number of new avionics protocols (e.g., NextGen) are being defined by the aeronautical industry and are planned for future implementation. Some aircraft have legacy protocols and while other aircraft have newer protocol stacks with revised or new protocols profiles.

When a new protocol behavior is required or desired in a protocol suite, the new protocol updates are installed in the device (e.g., a computing device) and then the device is recompiled and, if necessary, re-certified. The recompiling and/or re-certification processes are time consuming and add to the operating cost of the devices and associated systems.

### SUMMARY

The present application relates to a flexible protocol suite. The flexible protocol suite includes at least one flexible protocol layer including at least one profile loaded from an external device, wherein the loaded at least one profile, when selected for operation as a selected profile, dictates the behavior of the protocol during an exchange of messages.

### DRAWINGS

In the following detailed description, reference is made to the accompanying drawings, which form a part hereof, and in which is shown by way of illustration specific embodiments in which the invention may be practiced. These embodiments are described in sufficient detail to enable those skilled in the art to practice the invention. The following detailed description is not to be taken in any limiting sense and the scope of the present invention is defined only by the claims and equivalents thereof.
Figures 1A-1D illustrate block schematics of embodiments of flexible protocol layers being loaded in a flexible protocol suite in accordance with the present invention;
Figures 2A and 2B are expanded views of a block schematic of an embodiment of the flexible protocol layer of Figure 1A at two different times when different profiles are selected;
Figure 2C is an expanded view of a block schematic of an embodiment of the flexible protocol layer of Figure 1B;
Figure 2D is an expanded view of the block schematic of an embodiment of the flexible protocol layer of Figure 1A;
Figure 3 illustrates a block schematic of an embodiment of a flexible controller-pilot data link communications (CPDLC) application layer being loaded in a flexible aeronautical telecommunications network (ATN) in accordance with the present invention; and
Figure 4 illustrates a flow chart of a method of accessing a flexible protocol layer in a protocol suite in accordance with the present invention.

In accordance with common practice, the various described features are not drawn to scale but are drawn to emphasize features relevant to the present invention. Like reference characters denote like elements throughout figures and text.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention. It is to be understood that other embodiments may be utilized and that logical, mechanical and electrical changes may be made without departing from the scope of the present invention. The following detailed description is, therefore, not to be taken in a limiting sense.

The technology described herein provide a simple and inexpensive way to adjust protocol message sets in a protocol suite and to update protocol behavior in a protocol suite by loading a new profile database/file with new definitions of, at least, allowed messages, validation, and protocol parameters. A system that includes the flexible protocol suite with at least one flexible protocol layer supports more than one version of a protocol. The software of the flexible protocol layer is designed to be able to load one or more profiles. The system does not need to recompile or re-certify the protocol when the flexible protocol layer is loaded (also referred to herein as "downloaded") into the flexible protocol suite. The technology described herein removes the need to modify protocol code, recompile, and re-certify the flexible protocol suite when modifying the behavior of the protocol.

A "protocol stack" is an implementation of a protocol suite. A protocol suite is a definition of the set of protocols. Protocol suites are well known to be constructed of layers that encapsulate messages being sent from a higher layer to a lower layer that is logically closer to a physical communication (transmission) link. Likewise, the protocol suites un-encapsulate messages that are received from the physical transmission link at the lower layers and sent to the higher layer. Typically, the highest layer is an application layer and the lowest layer interfaces with the physical communication link.

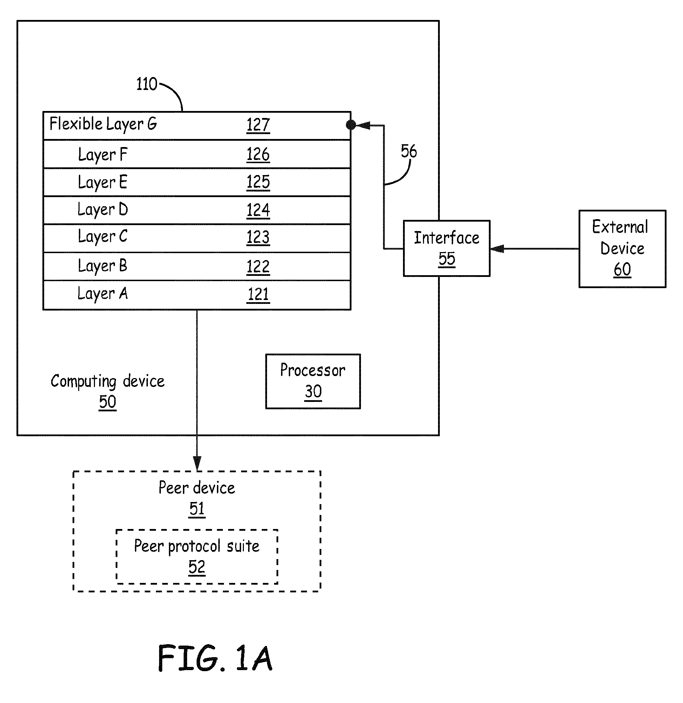

A protocol suite with at least one flexible protocol layer is defined herein as a flexible protocol suite. Figures 1A-1D illustrate block schematics of embodiments of a flexible protocol layer being loaded into a flexible protocol suite in accordance with the present invention. The flexible protocol layer includes at least one profile loaded from an external device. Upon being loaded into the layer, the at least one profile is operable independent of a recompiling process and/or are-certification process. The loaded at least one profile, when selected for operation, dictates the behavior of the protocol during an exchange of messages. In embodiments, two or more profiles are loaded from the external device without requiring any a recompiling process and/or are-certification process. In this case, only one of the two or more profiles is selected at any given time.

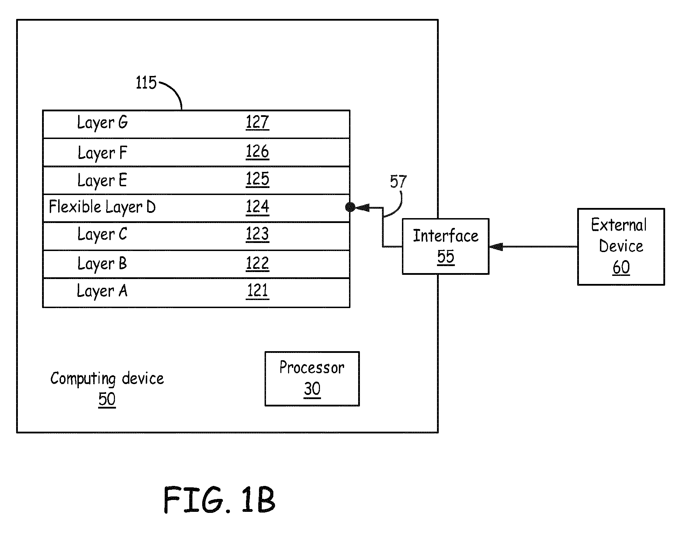

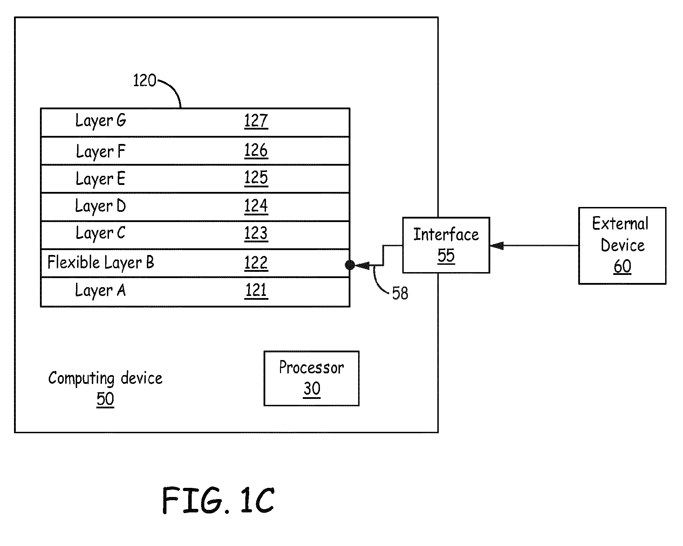

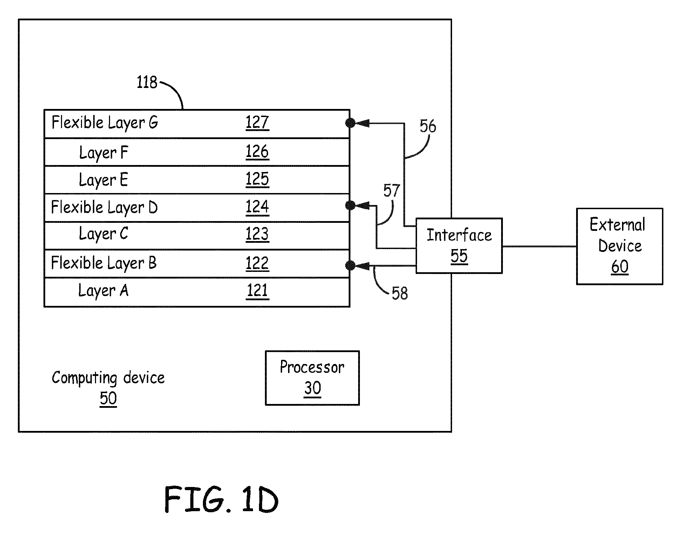

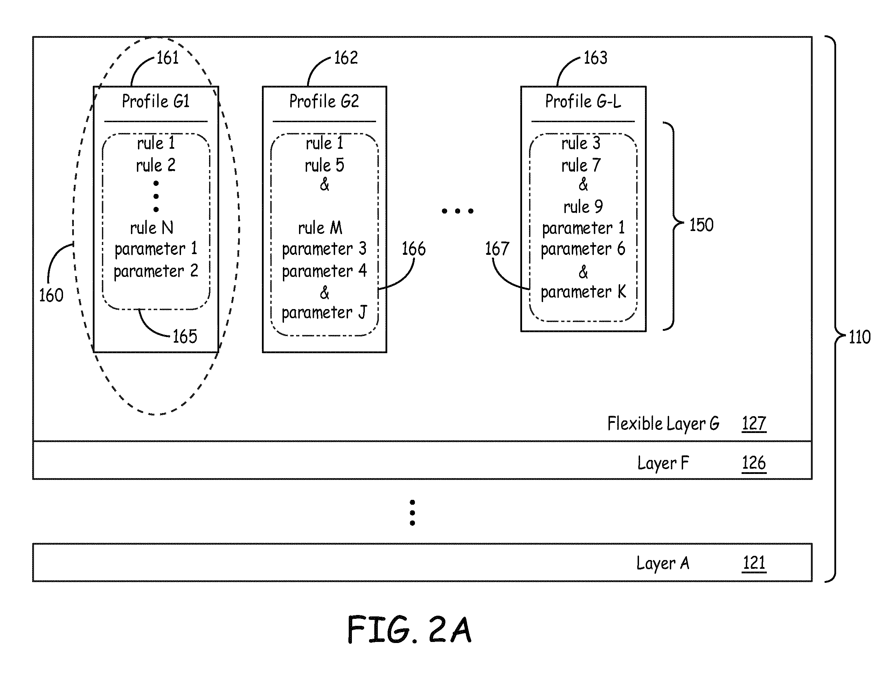

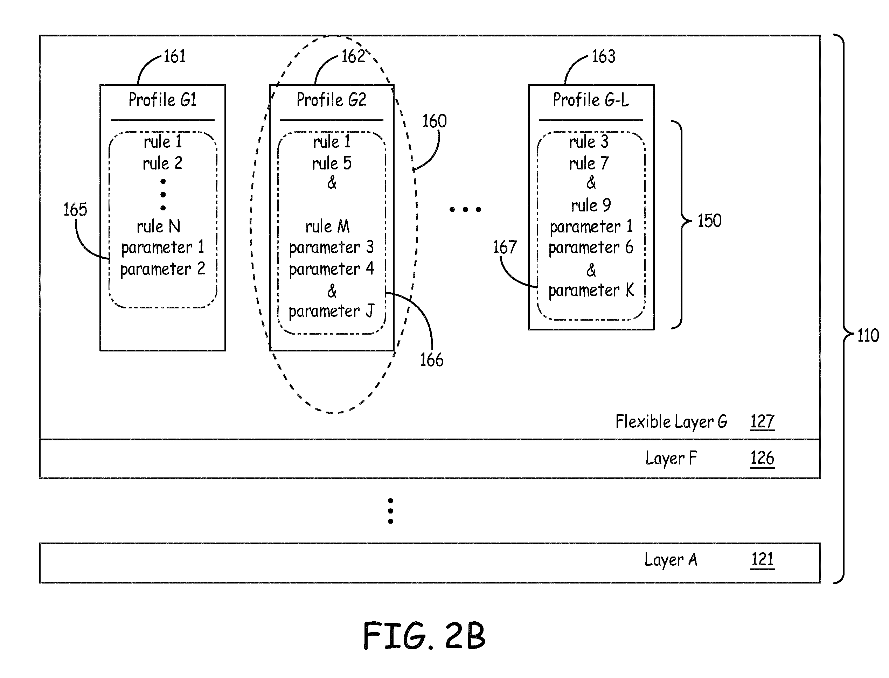

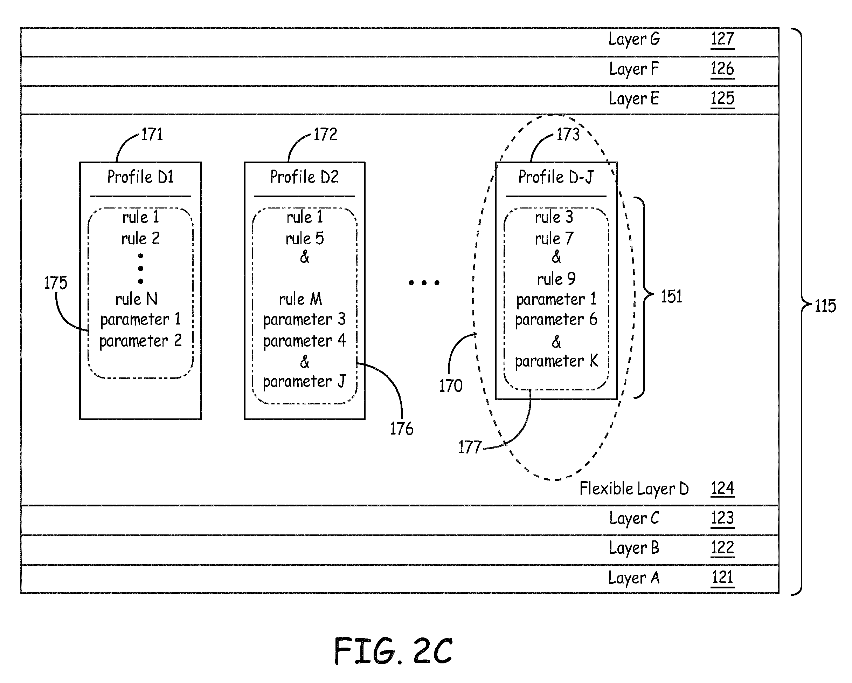

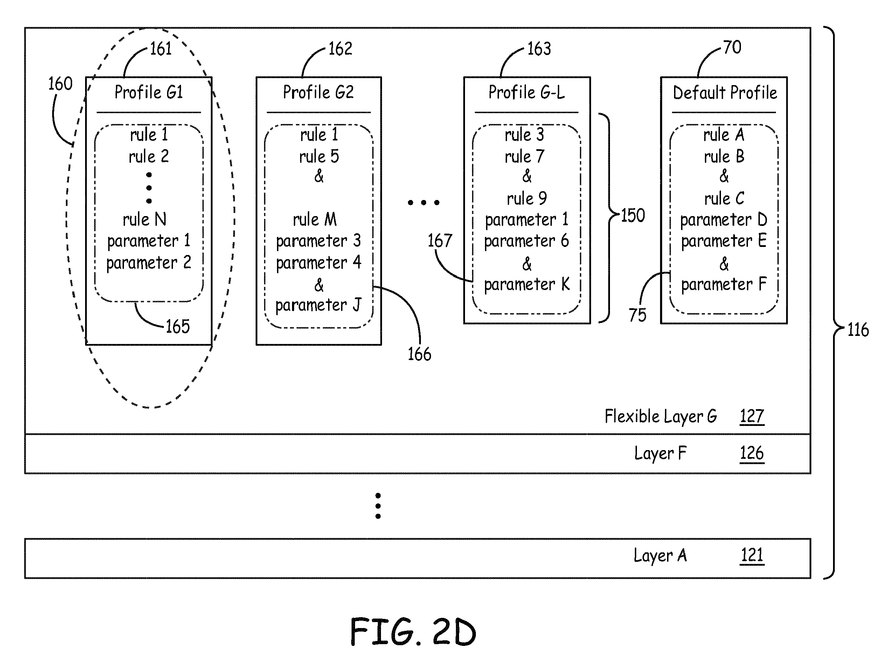

Figures 2A, 2B, and 2D are expanded views of the block schematic of the flexible protocol layer 127 of Figure 1A. Figure 2C is an expanded view of the block schematic of the flexible protocol layer 124 of Figure 1B. The computing device 50 shown in Figures 1A, 1B, 1C, and 1D includes a respective flexible protocol suite 110, 115, 120 and 118. The computing device 50 includes at least one processor 130 and at least one interface 55. An external device 60 is communicatively coupled to the at least one interface 55. The external device 60 shown in Figures 1A-1D is any device capable of downloading rules/parameters for protocol profiles to a protocol suite. As shown in Figure 1A, the external device 60 is downloading the plurality of profiles 161-163 (Figures 2A-2B) to the flexible protocol layer 127 via communication link 56. As shown in Figure 1B, the external device 60 is downloading the plurality of profiles 171-173 (Figure 2C) to the flexible protocol layer 124 in the flexible protocol suite 115 via communication link 57. As shown in Figure 1C, the external device 60 is downloading a plurality of profiles to the flexible protocol layer 122 in the flexible protocol suite 120 via communication link 58. As shown in Figure 1D, the external device 60 is downloading a plurality of profiles to the flexible protocol layers 122, 124, and 127 in the flexible protocol suite 118. In this latter embodiment, the protocol suite 118 includes the flexible protocol layer 127 of Figure 1A, the flexible protocol layer 124 of Figure 1B, and the flexible protocol layer 122 of Figure 1C. The flexible protocol layer 124 and the flexible protocol layer 122 shown in Figure 1D are referred to as "other-flexible-protocol layers 124 and 122" to the flexible protocol layer 127. Similarly, the flexible protocol layer 127 and the flexible protocol layer 122 shown in Figure 1D are other-flexible-protocol layers to the flexible protocol layer 124. The flexible protocol layer 127 and the flexible protocol layer 124 shown in Figure 1D are other-flexible-protocol layers to the flexible protocol layer 122.

The external device 60 can be a data loader, a computer, a laptop, a mobile phone, or a smart stick. Other types of external devices 60 currently available or to be developed in the future are possible.

As shown in Figure 1A, flexible layer G is a flexible protocol layer 127 in the flexible protocol suite 110. As shown in Figure 1A, the G^{th} layer 127 in the flexible protocol suite 110 is the highest (top) layer in the flexible protocol suite 110. The flexible protocol suite 110 includes other-protocol layers 121-126. The flexible protocol layer 127 includes a plurality of protocol profiles (also referred to herein as "profiles") downloaded from the external device 60. The arrow labeled 56 indicates the link between the interface 55 and the flexible protocol layer 127 that is used to download an additional profile to the flexible protocol layer 127. The connection between the external device 60 and the interface 55 can be a wired or wireless link as is known to one skilled in the art. As shown in Figure 1A, a peer device 51 with a peer protocol suite 52 is optionally connected (with either a wireless communication link or a wired communication link) to the flexible protocol stack 110.

When the flexible protocol suite 110 is being used to transmit data packets to a peer device 51 (e.g., a peer computing device) one of the plurality of profiles in the flexible protocol layer 127 is selected at any given time. At least one other-layer (e.g., at least one of the other-layers 121-126) is in the flexible protocol suite 110. Each of the other-layers 121-127 includes at least one profile. The flexible protocol layer 127 sends a message to (and inputs a message from) the adjacent other-layer 126 using a selected one of the plurality of profiles at any given time. In one implementation of this embodiment, at least one of the other-protocol layers 121-126 is a flexible protocol layer with a plurality of protocol profiles. In another implementation of this embodiment, all of the other-protocol layers 121-126 are flexible protocol layers with a plurality of protocol profiles. In yet another implementation of this embodiment, none of the other-protocol layers 121-126 are flexible protocol layers and new protocol profiles are not loadable into those non-flexible layers 121-126.

Only the flexible protocol layers in the protocol suites described in this document are able to load new protocol profiles in order to modify the protocol behavior. In embodiments in which the protocol profiles would conventionally require recompiling and/or re-certification, the protocol profiles loaded into the flexible protocol layers are loaded independent of (without requiring) any recompiling and/or re-certification. Each of the flexible protocol layers in a protocol suite sends a message to an adjacent layer using a selected one of the plurality of profiles in the flexible protocol layer at any given time. The flexible protocol suites 110, 115, 120, and 118 shown in Figures 1A, 1B, 1C, and 1D, respectively, include seven layers, which is typically of an open systems interconnection (OSI) protocol suite. In one implementation of this embodiment, the first layer 121 is a physical layer 121, the second layer 122 is a data link layer 122, the third layer 123 is a network layer 123, the fourth layer 124 is a transport layer 224, the fifth layer 125 is a session layer 125, the sixth layer 126 is a presentation layer, and the seventh layer 127 is an application layer 127. In one implementation of this embodiment, the at least one flexible protocol layer is in a four layer a transmission control protocol (TCP)/ Internet protocol (IP) protocol suite. In this latter embodiment, the first layer is a link layer, the second layer is an internet layer, the third layer is a transport layer, and the fourth layer is an application layer.

Figures 2A and 2B are expanded views of a block schematic of a first embodiment of the flexible protocol layer 127 in the flexible protocol suite 110 of Figure 1A at two different times when different profiles are selected. As shown in Figure 2A, the dashed oval numerically labeled 160 indicates a first profile 161 is selected as the selected protocol profile 160 at a first time. As shown in Figure 2B, the dashed oval 160 indicates a second profile 162 is selected as the selected protocol profile 160 at a second time. One of the protocol profiles is selected, based on a triggering event. A different protocol profile can be selected at a later time based on another triggering event. A triggering event includes receiving an initial message at the flexible protocol layer from the peer protocol suite. An initial message is a message used in the negotiations (handshake, etc.) to establish a link with a peer device or an initial message is the first message in a transmission from a peer as appropriate for the protocols being used. The peer protocol is not required to be a flexible protocol suite. The flexible protocol suite adjusts to use whichever protocol profile is required to communicate with the peer device that houses the peer protocol suite.

The flexible protocol layer 127 includes a plurality of profiles 161-163. The plurality of profiles 161-163 each include at least one of at least one rule and at least one parameter, which are referred to herein as rules/parameters. Each of the plurality of profiles 161-163 includes an associated plurality of rules/parameters represented generally at 150.

As shown in Figures 2A and 2B, the flexible protocol layer 127 (the G^{th} layer in the flexible protocol suite 110) includes a first profile 161 (profile G1), a second profile 162 (profile G2), and additional profiles up to an L^{th} profile163 (profile G-L) for the G^{th} layer in the flexible protocol suite 110. The first profile 161 includes rules/parameters 165, the second profile 162 includes rules/parameters 166, and the L^{th} profile 163 includes the L^{th} rules/parameters 167. In the exemplary embodiment of Figures 2A and 2B, the rules/parameters 165 include N rules and 2 parameters; the rules/parameters 166 include rules 1, 5, and M and parameters 3, 4, and J; and the rules/parameters 167 include rules 3, 7, and 9 and parameters 1, 6, and K. A, B, C, D, E, F, G, J, K, L, and M are different positive integers. Other rules/parameters in the first profile 161, the second profile 162, and the L^{th} profile 163 are possible. In one implementation of this embodiment, the flexible protocol layer 127 includes more than L profiles. In another implementation of this embodiment, the flexible protocol layer 127 includes fewer than L profiles.

As shown in Figure 2A, at a first time, the rules/parameters 165 in the selected protocol profile 160 (e.g., the first profile 161 in Figure 2A) dictate the behavior of the protocol during an exchange of messages with a communicatively coupled peer device (e.g., peer device 51 in Figure 1A). The protocol layer 126 (layer F) adjacent to the flexible protocol layer 127 (layer G) includes one or more profiles (not shown), at least one of which is compatible with the first profile 160 in the flexible protocol layer 127. The flexible protocol layer 127 sends (inputs) a message to (from) the adjacent layer 126 (also referred to herein as "other-layer 126") using the selected profile 161.

As shown in Figure 2B, at a second time, the rules/parameters 166 in the selected protocol profile 160 (e.g., the second profile 162 in Figure 2B) dictate the behavior of the protocol during an exchange of messages with a communicatively coupled peer device. The rules/parameters 166 in the selected protocol profile 160 (e.g., the second profile 162 in Figure 2B) dictate the behavior of the protocol during an exchange of messages with a communicatively coupled peer device. The flexible protocol layer 127 sends (inputs) a message to (from) the adjacent layer 126 (also referred to herein as "other-layer 126") using the selected profile 162.

Figure 2C is an expanded view of a block schematic of an embodiment of the flexible protocol layer 124 of Figure 1B. As shown in Figure 2C, the flexible protocol layer 124 (the D^{th} layer in the flexible protocol suite 110) of the flexible protocol suite 115 and includes a first profile 171 (profile D1), a second profile 175 (profile D2), and a J^{th} profile 173 (profile D-J). As shown in Figure 1B, the D^{th} layer in the flexible protocol suite 115 is the fourth layer. The first profile 171 (profile D1) includes rules/parameters 175, the second profile 172 (profile D2) includes rules/parameters 176, and the J^{th} profile 173 (profile D-J) includes the J^{th} rules/parameters 177. In the exemplary embodiment of the flexible protocol layer 124 shown in Figure 2C, the first profile 171 includes E rules and 2 parameters; the second profile 172 includes rules 1, 5, and T (T is a positive integer) and includes parameters 3, 4, and P (P is a positive integer); and the J^{th} profile 173 includes rules 3, 7, and 9 and parameters 1, 6, and K. Other rules/parameters in the first profile 171, a second profile 175, and a J^{th} profile 173 are possible. In one implementation of this embodiment, the flexible protocol layer 124 includes more than J profiles. In another implementation of this embodiment, the flexible protocol layer 124 includes fewer than J profiles. As shown in Figure 2C, the J^{th} profile 173 is the selected protocol profile 170. The selected protocol profile 170 is selected from the available profiles 172-173 in the flexible protocol layer 124.

Figure 2D is an expanded view of the block schematic of an embodiment of the flexible protocol layer 127 of Figure 1A. This embodiment of Figure 2D is similar to the embodiment of Figure 2A, with the addition of a default profile 70. The default profile 70 is a profile that is built into the code of the protocol stack 116. The default profile is not loaded into the flexible protocol suite 116 by an external device 60 communicatively coupled to the interface 55. Typically, the default profile 70 is built into the code of the protocol stack 116 during the manufacturing process.

As shown in Figure 2D, the flexible protocol layer 127 includes a default profile 70 in addition to the first profile 161 (profile G1), the second profile 162 (profile G2), and the additional profiles up to the L^{th} profile 163 (profile G-L) for the G^{th} layer in the flexible protocol suite 110. As shown in Figure 2D, the rules/parameters 165 in the selected protocol profile 160 (e.g., the first profile 161 in Figure 2A) dictate the behavior of the protocol during an exchange of messages with a communicatively coupled peer device (e.g., peer device 51 in Figure 1A). In another implementation of this embodiment, the default profile 70 is selected to dictate the behavior of the protocol during an exchange of messages with a communicatively coupled peer device (e.g., peer device 51 in Figure 1A).

The rules and/or parameters in the plurality of rules/parameters 150 associated with the at least one protocol profile in the flexible protocol layers define parameters that include (but are not limited to) at least one of: a definition of a message header; support of the message header; a definition of message identifications; support of the message identifications; a definition of message data elements; support of the message data elements; a definition of a concatenation of messages; support of the concatenation of the messages; a definition of constrained data; support of the constrained data; ranges of parameters for the message; constraints defining allowed data in the message; a timer value; a number of retries; and a size of the protocol data unit.

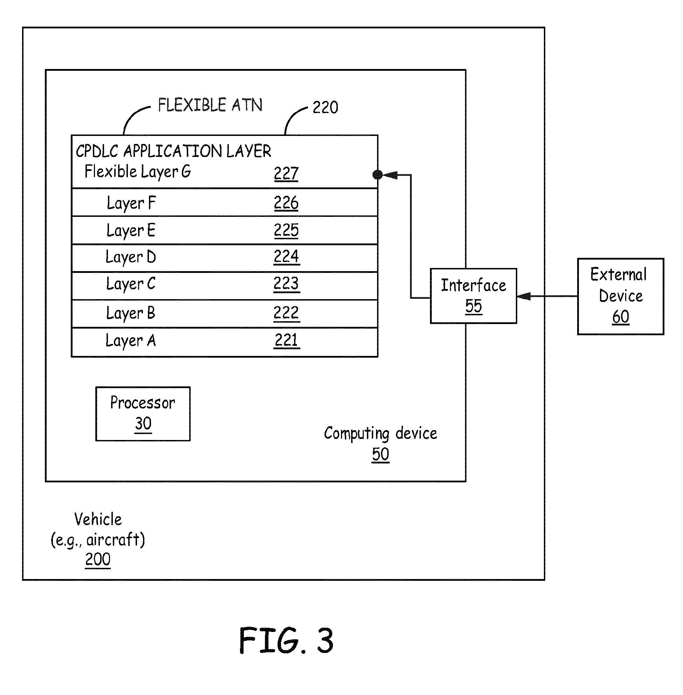

Figure 3 illustrates a block schematic of an embodiment of a flexible controller-pilot data link communications (CPDLC) application layer 227 being loaded in a flexible aeronautical telecommunications network (ATN) 220 in accordance with the present invention. The flexible ATN 220 is included in a computing device in a vehicle 200 such as an aircraft 200. The loaded profile, when selected for operation as a selected profile, dictates the behavior of the protocol during an exchange of messages. The plurality of profiles in the application layer includes a plurality of rules/parameters associated with a CPDLC application message.

In another implementation of this embodiment, the vehicle is a water-based vehicle or a land-based vehicle. In another implementation of this embodiment, the flexible protocol layer 227 is a layer in an open systems interconnection (OSI) protocol suite 220 in a computing device 50 on a water-based vehicle. In yet another implementation of this embodiment, the flexible layer 227 is the application layer in a four layered Transmission Control Protocol/Internet Protocol (TCP/IP) protocol suite 220.

For embodiments described herein, the at least one flexible protocol layer is a layer in one of: a transmission control protocol (TCP)/ Internet protocol (IP) protocol suites, a global system for mobile (GSM) protocol suite, an open systems interconnection (OSI) protocol suite; an aeronautical telecommunications network (ATN); a future air navigation system (FANS) protocol suite; an aircraft communications addressing and reporting system (ACARS) protocol suites.

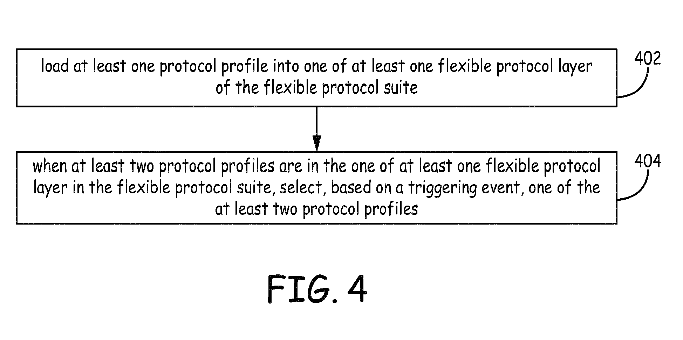

Figure 4 illustrates a flow chart of a method 400 of accessing a flexible protocol layer in a protocol suite in accordance with the present invention. Method 400 is applicable to any one of the embodiments of flexible protocol layers shown in Figures 1A-3.
At block 402, at least one protocol profile is loaded into one of at least one flexible protocol layer in the flexible protocol suite. For example, the protocol profiles 161-163 are loaded into the flexible layer 127 as shown in Figure 2A. When at least two protocol profiles are in the one of at least one flexible protocol layer in the flexible protocol suite, the method 400 flows to block 404. In one implementation of this embodiment, the flexible protocol suite is a flexible Aeronautical Telecommunication Network (ATN) (i.e., an avionics protocol suite) and at least one protocol profile is loaded into a flexible controller-pilot data link communications (CPDLC) application layer of the flexible ATN. In this case, the protocol profile loaded into the flexible CPDLC application layer of the flexible ATN does not need to be recompiled and/or re-certified after being loaded into the flexible CPDLC application layer. Thus, when block 402 is implement for avionics-based protocols, upon being loaded, the at least one profile is operable independent of any recompiling process and/or are-certification process, even though protocol profiles for avionic systems, require a recompiling process and/or are-certification process when installed in protocol suite during a manufacturing process.

At block 404, one of the at least two protocol profiles is selected, based on a triggering event. The selection of the protocol profile dictates the behavior of the protocol during an exchange of messages to and from the flexible protocol layer. For the exemplary case referred to with reference to block 402, one of the protocol profiles 161-163 is selected at one time and another of the protocol profiles 161-163 is selected at another time. In one implementation of this embodiment, the default protocol profile, such as default profile 70 shown in Figure 2D, is in the flexible protocol layer 127 of the flexible protocol suite 116. In this case, the when one protocol profile (such as profile 161) is loaded into one of at least one flexible protocol layer (such as flexible protocol layer 127) in the flexible protocol suite (such as flexible protocol suite 116), one of the at least two protocol profiles (such a profile 161 or default profile 70) is selected, based on a triggering event.

The selected one of the plurality of profiles is selected at one of the following times: when a vehicle in which the flexible protocol suite is stored is powered up; when a device in which the flexible protocol suite is stored is powered up; when the device in which the flexible protocol suite is stored is booted up; when a negotiation with a peer protocol suite is completed; when the negotiation with the peer protocol suite is initiated; when a first message is received from the peer protocol suite; when a global positioning system (GPS) signal is received; at a compile time of compiler directives; at a compile time of source code file replacement; at a boot time to read program pins; at a boot time of an aircraft personality module (APM); at a boot time of non-volatile memory; and during a protocol connection phase (CM logon). Other times at which the selected profile is selected are possible. The flexible profiles described herein, which define and control the protocol message set, could be a loadable data base.

In one implementation of this embodiment, the at least one protocol profile loaded into the at least one flexible protocol layer of a protocol suite is at least two protocol profiles loaded into an application layer. A message is received at the flexible protocol layer from a peer protocol suite 52 in a peer device 51 (Figure 1A). The protocol suite 52 in a peer device 51 is not required to be a flexible protocol suite. In one implementation of this embodiment, the triggering event is receiving an initial message from the one of at least one flexible protocol layer from the peer protocol suite. In another implementation of this embodiment, the triggering event is a first triggering event. When a second triggering event is received, another one of the at least two protocol profiles is selected (re-selected). The re-selected protocol profile is adhered to during the subsequent exchange of messages. The re-selected protocol profile dictates the behavior of the flexible protocol suite during an exchange of messages. The executing of the selected protocol is based on a connection to a peer protocol suite (e.g., peer protocol suite 52).

The technology described herein is applicable to transmission control protocol (TCP)/ Internet protocol (IP) protocol suites, global system for mobile (GSM) protocol suites, open systems interconnection (OSI) protocol suites, and avionics protocol suites, including, aeronautical telecommunications network (ATN), future air navigation system (FANS) protocol suites, Aircraft Communications Addressing and Reporting System (ACARS) protocol suites, and Aeronautical Research Incorporated (ARINC) protocol suite. By adding the ability of loading flexible protocol profiles (databases and/or files), the customers (e.g., airframe manufacturers and/or airlines), only need to load a new updated database/file if those skilled in the art decide protocol behavior needs to be changed. For example, those skilled in the art may determine certain messages should or should not be supported, certain validation should be more/less strict, at least one timer value should be changed, or the number of retries should be changed.

The technology described herein provides currently unavailable flexibility. For example, in an avionics application, a protocol suite as described herein is able to support multiple, different profiles depending on geographic location, aircraft type, etc. Additionally, the technology described herein provides a faster turn-around time.

In avionics technology, certification is required on a protocol suite prior to being implemented in the protocol stack of an aircraft computing/processing system. However, an implementation of the technology described herein does not require any certification. The revised upgraded protocol is loaded as a new profile database as industry evolves. For example, a previous data link program (e.g., Federal Aviation Administration (FAA) DATACOM OTA, Protected Mode CPDLC (PMCPDLC) V2) performed on the MarkII+ computer management unit (CMU), can be implemented with an upgrade to the legacy PMCDPLC message set (e.g., Version 1 (V1), ED110, message set to Version 2 (V2), SC214, message set). As part of this "upgrade" effort, the profiles of protocol definitions (e.g., a V1 profile and a V2 profile) are already supported. Each profile contains the definition/support of: message header; supported message IDs; data elements; concatenation of messages and/or data; and constrained data.

The implementation ensures each message is supported, and then validated. The flexible profiles described herein are a configuration step and to not require code modifications. No (or minimal) compiler directives are required. The flexible profiles described herein are ready for current programs and future programs and can provide future validation restrictions.

The application layer of an Internet protocol suite includes, but is not limited to, one or more of the following: Dynamic Host Configuration Protocol (DHCP), DHCPv6 (version 6 of DHCP), Domain Name System (DNS), File Transfer Protocol (FTP), Hypertext Transfer Protocol (HTTP), Internet message access protocol (IMAP), Internet Relay Chat (IRC), Lightweight Directory Access Protocol (LDAP), Media Gateway Control Protocol (MGCP), Network News Transfer Protocol (NNTP), Border Gateway Protocol (BGP), Network Time Protocol (NTP), Post Office Protocol (POP), remote procedure call (RPC), remote procedure call (RPC), Real-time Transport Protocol (RTP), Real Time Streaming Protocol (RTSP), Routing Information Protocol (RIP), Session Initiation Protocol (SIP), Simple Mail Transfer Protocol (SMTP), Simple Network Management Protocol (SNMP), SOCKet Secure (SOCKS), Secure Shell (SSH), Telnet, Transport Layer Security (TLS), and Extensible Messaging and Presence Protocol (XMPP).

The transport layer of an Internet protocol suite includes, but is not limited to, one or more of the following protocols: Transmission Control Protocol (TCP or TCP/IP), User Datagram Protocol (UDP), Datagram Congestion Control Protocol (DCCP), Stream Control Transmission Protocol (SCTP), Resource Reservation Protocol (RSVP), Structured Stream Transport (SST), Wireless Datagram Protocol (WDP), Reliable Datagram Sockets (RDS), and Multipurpose Transaction Protocol (MTP).

The Internet layer of an Internet protocol suite includes, but is not limited to, one or more of the following: Internet Protocol version 4 (IPv4), Internet Protocol version 6 (IPv6), Internet Control Message Protocol (ICMP), Internet Control Message Protocol version 6 (ICMPv6), Explicit Congestion Notification (ECN), Internet Group Management Protocol (IGMP), Internet Protocol Security (IPsec), Gateway-to-Gateway Protocol (GGP), Locator/Identifier Separation Protocol (LISP), and swIPe IP Security Protocol (swIPe).

The link layer of an Internet protocol suite includes, but is not limited to, one or more of the following: Address Resolution Protocol (ARP), Neighbor Discovery Protocol (NDP), Open Shortest Path First (OSPF), Layer 2 Tunneling Protocol (L2TP), Point-to-Point Protocol (PPP), media access control (MAC), Fibre Distributed Data Interface (FDDI), Integrated Services Data Digital Network (ISDN), Digital subscriber line (DSL), Spanning Tree Protocol (STP), Synchronous transmit-receive (STR), Synchronous Data Link Control (SDLC).

The application layer of an OSI protocol suite includes, but is not limited to, the above referenced protocol and/or one or more of the following: Network News Transfer Protocol (NNTP), SSI (Simple Sensor Interface), Domain Name System (DNS), Network File System (NFS), and Network Configuration Protocol (NETCONF).

The presentation layer of an OSI protocol suite includes, but is not limited to, the above referenced protocol and/or one or more of the following: Multipurpose Internet Mail Extensions (MIME), External Data Representation (XDR), Lighweight Presentation Protocol, and NetWare Core Protocol (NCP).

The session layer of an OSI protocol suite includes, but is not limited to, the above referenced protocol and/or one or more of the following: named pipe, Network Basic Input/Output System (NetBIOS), Session Announcement Protocol (SAP), Point-to-Point Tunneling Protocol (PPTP), SPDY, Transport Layer Security (TLS), and Secure Sockets Layer (SSL).

The transport layer of an OSI protocol suite includes, but is not limited to, the above referenced protocol and/or Internetwork Packet Exchange/Sequenced Packet Exchange (IPX/SPX).

The network layer of an OSI protocol suite includes, but is not limited to, the above referenced protocols and/or Apple Talk.

The data link layer of an OSI protocol suite includes, but is not limited to, the above referenced protocols and/or Asynchronous Transfer Mode (ATM), High-Level Data Link Control (HDLC), Serial Line Internet (or, Interface) Protocol (SLIP), Generic Framing Procedure (GFP), Parallel Line Internet Protocol (PLIP), Institute of Electrical and Electronics Engineers (IEEE) 802.2 or 802.3 standard, logical link control (LLC), frame relay, International Telecommunication Union's Telecommunication (ITU-T) G.hnn DLL or X.25 standard.

The following functions are some, but not all of the behaviors controlled by a selected protocol in a protocol suite: a message header is validated based on the selected protocol. The validation of the message header includes at least one of: message identification number check; message reference number check; message latency check; and a futuristic message check. The at least one flexible protocol layer is at least an application layer.

In one implementation of this embodiment, the plurality of profiles in the application layer includes an associated plurality of rules/parameters used to determine if a CPDLC message is valid.

### Example Embodiments

Example 1 includes a flexible protocol suite comprising: at least one flexible protocol layer including at least one profile loaded from an external device, wherein the loaded at least one profile, when selected for operation as a selected profile, dictates the behavior of the protocol during an exchange of messages.

Example 2 includes the flexible protocol suite of Example 1, wherein the at least one profile loaded from the external device includes a plurality of profiles loaded from the external device, and wherein the plurality of profiles include at least one of: at least one rule, and at least one parameter.

Example 3 includes the flexible protocol suite of Example 2, wherein the plurality of profiles include an associated plurality of rules/parameters, wherein a rule/parameter associated with a profile defines at least one parameter that comprises at least one of: a definition of a message header; support of the message header; a definition of message identifications; support of the message identifications; a definition of message data elements; support of the message data elements; a definition of a concatenation of messages; support of the concatenation of the messages; a definition of constrained data; support of the constrained data; ranges of parameters for the message; constraints defining allowed data in the message; a timer value; a number of retries; and a size of the protocol data unit.

Example 4 includes the flexible protocol suite of any of Examples 2-3, wherein the selected one of the plurality of profiles is selected at one of the following times: when a vehicle in which the flexible protocol suite is stored is powered up; when a device in which the flexible protocol suite is stored is powered up; when the device in which the flexible protocol suite is stored is booted up; when a negotiation with a peer protocol suite is completed; when the negotiation with the peer protocol suite is initiated; when a first message is received from the peer protocol suite; when a global positioning system (GPS) signal is received; at a compile time of compiler directives; at a compile time of a source code file replacement; at a boot time to read program pins; at a boot time of an aircraft personality module (APM); at a boot time of non-volatile memory; and during a protocol connection phase.

Example 5 includes the flexible protocol suite of any of Examples 1-4, further comprising at least one other-flexible-protocol layer including at least one profile loaded from the external device.

Example 6 includes the flexible protocol suite of any of Examples 1-5, wherein the at least one flexible protocol layer is at least an application layer, and wherein the at least one profile loaded from an external device in the application layer includes a plurality of rules/parameters associated with a controller-pilot data link communications (CPDLC) applications message, wherein, upon being loaded in the at least one flexible protocol layer, the at least one profile is operable independent of a recompiling process and/or a re-certification process.

Example 7 includes the flexible protocol suite of any of Examples 1-6, wherein the at least one flexible protocol layer is a layer in one of: a transmission control protocol (TCP)/ Internet protocol (IP) protocol suites; a global system for mobile (GSM) protocol suite; an open systems interconnection (OSI) protocol suite; an aeronautical telecommunications network (ATN); a future air navigation system (FANS) protocol suite; and an aircraft communications addressing and reporting system (ACARS) protocol suites.

Example 8 includes the flexible protocol suite of any of Examples 1-7, wherein the at least one profile includes a plurality of rules/parameters, wherein a rule/parameter defines at least one parameter that comprises at least one of: a definition of a message header; support of the message header; a definition of message identifications; support of the message identifications; a definition of message data elements; support of the message data elements; a definition of a concatenation of messages; support of the concatenation of the messages; a definition of constrained data; support of the constrained data; ranges of parameters for the message; constraints defining allowed data in the message; a timer value; a number of retries; and a size of the protocol data unit, and wherein the selected profile is selected at one of the following times: when a vehicle in which the flexible protocol suite is stored is powered up; when a device in which the flexible protocol suite is stored is powered up; when the device in which the flexible protocol suite is stored is booted up; when a negotiation with a peer protocol suite is completed; when the negotiation with the peer protocol suite is initiated; when a first message is received from the peer protocol suite; when a global positioning system (GPS) signal is received; at a compile time of compiler directives; at a compile time of a source code file replacement; at a boot time to read program pins; at a boot time of an aircraft personality module (APM); at a boot time of non-volatile memory; and during a protocol connection phase.

Example 9 includes a method of accessing a flexible protocol layer in a flexible protocol suite, the method comprising: loading at least one protocol profile into one of at least one flexible protocol layer of the flexible protocol suite, wherein, when at least two protocol profiles are in one of the at least one flexible protocol layer in the flexible protocol suite, the method further comprises: selecting, based on a triggering event, one of the at least two protocol profiles, wherein the selected protocol profile dictates the behavior of the flexible protocol suite during an exchange of messages.

Example 10 includes the method of Example 9, wherein loading the at least one protocol profile into the one of at least one flexible protocol layer of the flexible protocol suite comprises loading the at least one protocol profile into the one of the at least one flexible protocol layer of an open systems interconnection (OSI) protocol suite.

Example 11 includes the method of any of Examples 9-10, wherein loading the at least one protocol profile into the one of at least one flexible protocol layer of the flexible protocol suite comprises loading the at least one protocol profile into the one of the at least one flexible protocol layer of in one of: a transmission control protocol (TCP)/ Internet protocol (IP) protocol suites, a global system for mobile (GSM) protocol suite, an open systems interconnection (OSI) protocol suite; an aeronautical telecommunications network (ATN), a future air navigation system (FANS) protocol suite; and an aircraft communications addressing and reporting system (ACARS) protocol suites.

Example 12 includes the method of any of Examples 9-11, wherein the selecting, based on the triggering event comprises selecting based on receiving an initial message from a peer protocol suite.

Example 13 includes the method of any of Examples 9-12, wherein the triggering event is a first triggering event, and wherein loading the at least one protocol profile into the one of at least one flexible protocol layer of the flexible protocol suite comprises: loading at least two protocol profiles into the one of at least one flexible protocol layer of the flexible protocol suite, the method further comprising: re-selecting, based on a second triggering event, another one of the at least two protocol profiles, wherein the re-selected protocol profile dictates the behavior of the flexible protocol suite during an exchange of messages.

Example 14 includes the method of any of Examples 9-13, wherein the flexible protocol layer of the flexible protocol suite is an application layer, wherein, upon being loaded in the at least one flexible application layer, the at least one protocol profile is operable independent of a recompiling process and/or a re-certification process, wherein executing the selected protocol comprises: executing a controller-pilot data link communications (CPDLC) application in the application layer of the based on a connection to a peer protocol suite.

Example 15 includes the method of any of Examples 9-14, wherein loading the at least one protocol profile into the one of at least one flexible protocol layer of the flexible protocol suite comprises: loading the at least one protocol profile into an application layer.

Example 16 includes the method of any of Examples 9-15, wherein loading the at least one protocol profile into the one of at least one flexible protocol layer of the flexible protocol suite comprises: loading the at least one protocol profile into a transport layer.

Example 17 includes the method of any of Examples 9-16, wherein loading the at least one protocol profile into the one of at least one flexible protocol layer of the flexible protocol suite comprises; loading the at least one protocol profile into an internet layer.

Example 18 includes the method of any of Examples 9-17, wherein the flexible protocol suite is a flexible Aeronautical Telecommunication Network (ATN), and wherein loading the at least one protocol profile into the one of at least one flexible protocol layer of the flexible protocol suite comprises: loading the at least one protocol profile into a flexible controller-pilot data link communications (CPDLC) application layer of the flexible ATN.

Example 19 includes a flexible Aeronautical Telecommunication Network (ATN) in an avionics system comprising: a flexible controller-pilot data link communications (CPDLC) application layer including at least one profile loaded from an external device, wherein the loaded at least one profile, when selected for operation as a selected profile, dictates the behavior of the protocol during an exchange of messages.

Example 20 includes the flexible protocol suite of Example 19, wherein the at least one profile includes an associated plurality of rules/parameters, wherein a rules/parameter associated with a profile defines at least one parameter that comprises at least one of: a definition of a message header; support of the message header; a definition of message identifications; support of the message identifications; a definition of message data elements; support of the message data elements; a definition of a concatenation of messages; support of the concatenation of the messages; a definition of constrained data; support of the constrained data; ranges of parameters for the message; constraints defining allowed data in the message; a timer value; a number of retries; and a size of the protocol data unit, and wherein the selected profile is selected at one of the following times: when an aircraft in which the flexible protocol suite is stored is powered up; when a device in which the flexible protocol suite is stored is powered up; when the device in which the flexible protocol suite is stored is booted up; when a negotiation with a peer protocol suite is completed; when the negotiation with the peer protocol suite is initiated; when a first message is received from the peer protocol suite; when a global positioning system (GPS) signal is received; at a compile time of compiler directives; at a compile time of a source code file replacement; at a boot time of program pins; at a boot time of an aircraft personality module (APM); at a boot time of non-volatile memory; and during a protocol connection phase .

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A flexible protocol suite comprising:
at least one flexible protocol layer including at least one profile loaded from an external device, wherein the loaded at least one profile, when selected for operation as a selected profile, dictates the behavior of the protocol during an exchange of messages.

2. The flexible protocol suite of claim 1, wherein the at least one profile loaded from the external device includes a plurality of profiles loaded from the external device, and wherein the plurality of profiles include at least one of: at least one rule, and at least one parameter.

3. The flexible protocol suite of claim 2, wherein the plurality of profiles include an associated plurality of rules/parameters, wherein a rule/parameter associated with a profile defines at least one parameter that comprises at least one of: a definition of a message header; support of the message header; a definition of message identifications; support of the message identifications; a definition of message data elements; support of the message data elements; a definition of a concatenation of messages; support of the concatenation of the messages; a definition of constrained data; support of the constrained data; ranges of parameters for the message; constraints defining allowed data in the message; a timer value; a number of retries; and a size of the protocol data unit.

4. The flexible protocol suite of claim 2, wherein the selected one of the plurality of profiles is selected at one of the following times: when a vehicle in which the flexible protocol suite is stored is powered up; when a device in which the flexible protocol suite is stored is powered up; when the device in which the flexible protocol suite is stored is booted up; when a negotiation with a peer protocol suite is completed; when the negotiation with the peer protocol suite is initiated; when a first message is received from the peer protocol suite; when a global positioning system (GPS) signal is received; at a compile time of compiler directives; at a compile time of a source code file replacement; at a boot time to read program pins; at a boot time of an aircraft personality module (APM); at a boot time of non-volatile memory; and during a protocol connection phase.

5. The flexible protocol suite of claim 1, further comprising at least one other-flexible-protocol layer including at least one profile loaded from the external device.

6. The flexible protocol suite of claim 1, wherein the at least one flexible protocol layer is at least an application layer in an aeronautical telecommunications network (ATN), and wherein the at least one profile loaded from an external device in the application layer includes a plurality of rules/parameters associated with a controller-pilot data link communications (CPDLC) applications message, wherein, upon being loaded in the at least one flexible protocol layer, the at least one profile is operable independent of a recompiling process and/or a re-certification process.

7. The flexible protocol suite of claim 1, wherein the at least one flexible protocol layer is a layer in one of: a transmission control protocol (TCP)/ Internet protocol (IP) protocol suites; a global system for mobile (GSM) protocol suite; an open systems interconnection (OSI) protocol suite; an aeronautical telecommunications network (ATN); a future air navigation system (FANS) protocol suite; and an aircraft communications addressing and reporting system (ACARS) protocol suites.

8. A method of accessing a flexible protocol layer in a flexible protocol suite, the method comprising:
loading at least one protocol profile into one of at least one flexible protocol layer of the flexible protocol suite, wherein, when at least two protocol profiles are in one of the at least one flexible protocol layer in the flexible protocol suite, the method further comprises:
selecting, based on a triggering event, one of the at least two protocol profiles, wherein the selected protocol profile dictates the behavior of the flexible protocol suite during an exchange of messages.

9. The method of claim 8, wherein the flexible protocol suite is a flexible Aeronautical Telecommunication Network (ATN), and wherein loading the at least one protocol profile into the one of at least one flexible protocol layer of the flexible protocol suite comprises:
loading the at least one protocol profile into a flexible controller-pilot data link communications (CPDLC) application layer of the flexible ATN.

10. The method of claim 8, wherein loading the at least one protocol profile into the one of at least one flexible protocol layer of the flexible protocol suite comprises loading the at least one protocol profile into the one of the at least one flexible protocol layer of in one of: a transmission control protocol (TCP)/ Internet protocol (IP) protocol suites, a global system for mobile (GSM) protocol suite, an open systems interconnection (OSI) protocol suite; an aeronautical telecommunications network (ATN), a future air navigation system (FANS) protocol suite; and an aircraft communications addressing and reporting system (ACARS) protocol suites.
